# EUROPEAN PATENT SPECIFICATION

(11) **EP 4 617 890 B1**
(45) Date of publication and mention of the grant of the patent: **25.11.2026**
(21) Application number: 25160897.2
(22) Date of filing: 28.02.2025
(51) Int. Cl.: G06F 13/364

(54) **AUXILIARY BUS MASTER CIRCUIT, ELECTRONIC DEVICE, AND METHOD FOR CONTROLLING AUXILIARY BUS MASTER CIRCUIT**
HILFSBUS-MASTER-SCHALTUNG, ELEKTRONISCHE VORRICHTUNG UND VERFAHREN ZUR STEUERUNG DER HILFSBUS-MASTER-SCHALTUNG
CIRCUIT MAÎTRE DE BUS AUXILIAIRE, DISPOSITIF ÉLECTRONIQUE ET PROCÉDÉ DE COMMANDE DE CIRCUIT MAÎTRE DE BUS AUXILIAIRE

(30) Priority: 15.03.2024 JP 2024041479
(43) Date of publication of application: 17.09.2025
(73) Proprietor: CASIO COMPUTER CO., LTD., Tokyo 151-8543 (JP)
(72) Inventor: Matsubara, Masao, Hamura-shi, Tokyo, 205-8555 (JP)
(74) Representative: Grünecker Patent- und Rechtsanwälte PartG mbB

(56) References cited:
- US-A1- 2006 288 143
- ARM: "AMBA SPECIFICATION (REV2.0)", ANNOUNCEMENT ARM, XX, XX, vol. Rev 2.0, 13 May 1999 (1999-05-13), pages 1 - 230, XP007901265

## Description

The present disclosure relates to an auxiliary bus master circuit, an electronic device, and a method for controlling an auxiliary bus master circuit.

When a large amount of data is desired to be transferred at a high speed, burst transfer may be used. In normal transfer, when both of a value of an address and a value of data are designated each time one piece of data is transferred, the one piece of data is transferred and transfer is completed each time. In contrast, in burst transfer, a value of a starting address and a value of a prescribed number of pieces of data are designated first, and the prescribed number of pieces of data transfer is performed from the starting address. In other words, in burst transfer, data transfer is pipelined, and thus data present in continuous addresses can be transferred at a high speed.

When there is a plurality of bus masters that perform data transfer, permission for data transfer needs to be preferentially given to, for example, a bus master having a strict time restriction. Thus, there is a system for setting a degree of priority for each bus master, and preferentially giving permission for data transfer to a bus master having a high degree of priority. For example, Unexamined Japanese Patent Application Publication No. 2021-82103 discloses a data transfer system for improving transfer efficiency of the entire system by dynamically changing a degree of priority, based on weight data according to a period from a theoretical time at which data transfer is completed to an issue time of a transfer request issued next.

The data transfer system disclosed in Unexamined Japanese Patent Application Publication No. 2021-82103 has the objective of improving transfer efficiency of the entire system by dynamically changing a degree of priority of data transfer according to a transfer request issued by a plurality of masters. However, in this system, even when a specific bus master (herein, referred to as a high priority degree master circuit) needs to complete, in a short time, data transfer continued for a plurality of times in a discrete address space, a transfer request of another master may interrupt between transfer requests (single transfer or burst transfer) continuously issued by the high priority degree master circuit. Therefore, even when a degree of priority of the high priority degree master circuit is set to be maximum, continuous transfer cannot be performed with top priority, and there is a problem that it takes time until all pieces of continuous transfer issued by the high priority degree master circuit are completed. US 2006/288143 A1 is disclosing an Advanced High-performance Bus multi-master arbitration.

The present disclosure has been made in view of the circumstances described above, and has an advantage of providing an auxiliary bus master circuit, an electronic device, and a method for controlling an auxiliary bus master circuit that can complete, when a high priority degree master circuit performs data transfer continued for a plurality of times, the data transfer in a short time.

This is achieved by the independent claims. The dependent claims describe advantageous embodiments.

According to the present disclosure, when a high priority degree master circuit performs data transfer continued for a plurality of times, the data transfer can be completed in a short time.

A more complete understanding of this application can be obtained when the following detailed description is considered in conjunction with the following drawings, in which:
FIG. 1 is a diagram illustrating a configuration of a system according to an embodiment;
FIG. 2 is a diagram illustrating a configuration of an auxiliary bus master circuit according to the embodiment;
FIG. 3 is a diagram illustrating a configuration example of a D flip-flop having a load function;
FIG. 4 is a diagram illustrating a configuration example of the D flip-flop having the load function corresponding to input/output of 2 bits;
FIG. 5 is a diagram illustrating one example of a time chart when burst transfer for writing is performed;
FIG. 6 is a diagram illustrating a configuration example of a system including three low priority degree master circuits;
FIG. 7A is a diagram illustrating a bus access example when the auxiliary bus master circuit is in operation in the system illustrated in FIG. 6; FIG. 7B is a diagram illustrating a bus access example when the auxiliary bus master circuit is not in operation in the system illustrated in FIG. 6;
FIG. 8 is a diagram illustrating one example of a time chart when burst transfer for reading is performed;
FIG. 9 is a diagram illustrating one example of a time chart when an operation of the auxiliary bus master circuit is stopped while burst transfer for writing is performed;
FIG. 10 is a diagram illustrating a bus access example when the auxiliary bus master circuit is not in operation in the system illustrated in FIG. 6 and no low priority degree master circuit group performs data transfer;
FIG. 11 is a diagram illustrating one example of a part of a code that describes a control sequence of a control circuit according to the embodiment; and
FIG. 12 is a diagram illustrating a configuration example of a sound source system according to the embodiment.

An auxiliary bus master circuit and the like according to an embodiment are described with reference to drawings. Note that, in the drawings, the same or corresponding portions are denoted with the same reference signs.

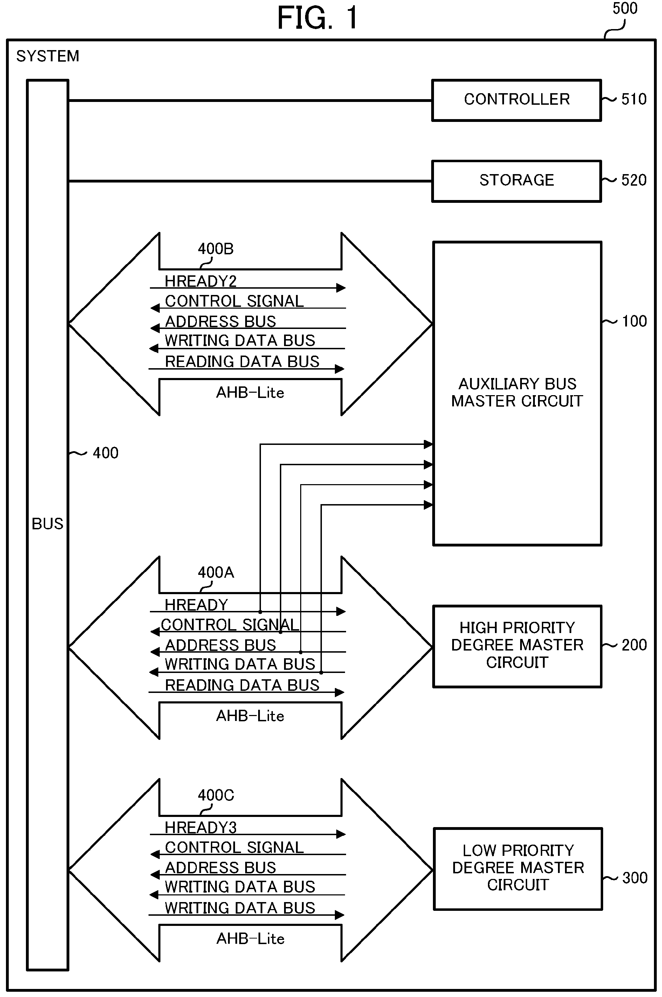

As illustrated in FIG. 1, an auxiliary bus master circuit 100 according to the embodiment is connected to a bus 400 in a system 500 in which a high priority degree master circuit 200 having a bus access right having a high degree of priority and a low priority degree master circuit 300 having a bus access right having a lower degree of priority than the high priority degree master circuit 200 are connected to one bus 400. The low priority degree master circuit 300 may be one master or may be a plurality of masters.

The bus 400 in the system 500 is Advanced High-performance Bus (AHB)-Lite of the Advanced Microcontroller Bus Architecture (AMBA) standards. A specific specification of the bus 400 is described in an ARM specification sheet opened to the public by ARM company. The ARM specification sheet can be downloaded from, for example, https://developer.arm.com/documentation/ihi0011/a/https://developer.arm.com/documentation/ih i0033/a and the like as of 22 January 2024.

As illustrated in FIG. 1, the system 500 includes a controller 510 and a storage 520. The controller 510 is constituted from at least one processor such as a central processing unit (CPU) and a digital signal processor (DSP), for example. The controller 510 puts the system 500 in operation by executing a program stored in the storage 520. The storage 520 stores a program executed by the controller 510 and necessary data. The storage 520 may include a random access memory (RAM), a read only memory (ROM), a flash memory, and the like, which are not limited thereto.

In the system 500, data transfer is performed between the high priority degree master circuit 200 or the low priority degree master circuit 300 and the storage 520. At this time, when data transfer of the high priority degree master circuit 200 competes with data transfer of the low priority degree master circuit 300 as in a case where, for example, the high priority degree master circuit 200 and the low priority degree master circuit 300 simultaneously attempt to access the storage 520, a degree of priority of a bus access right is set in the system 500 in such a way that data transfer of the high priority degree master circuit 200 is prioritized.

The system 500 includes an arbiter in such a way as to prioritize access to a bus by a bus master having a high degree of priority in such a manner. The arbiter performs arbitration of acquisition of an access right to a bus on a plurality of bus masters connected to the bus 400. Specifically, the arbiter acquires a signal (a signal for requesting an access right to the bus 400, such as NONSEQ in a transfer type (HTRANS) signal, which is referred to as an access request signal herein) output from each of the auxiliary bus master circuit 100, the high priority degree master circuit 200, and the low priority degree master circuit 300, and the arbiter determines which bus master the access right to the bus 400 is given to. Note that the bus 400 may not be a mere bus, and may be constituted as a bus circuit including an arbiter.

For example, when a bus master that outputs the access request signal is one, the arbiter gives the access right to the bus 400 to the bus master (that outputs the access request signal).

When there is a plurality of bus masters that output the access request signal, the arbiter gives the access right to the bus 400 to a bus master having a highest degree of priority among the plurality of bus masters that output the access request signal. When there is a plurality of bus masters having a highest degree of priority, the arbiter gives the access right to the bus 400 to the plurality of bus masters having the highest degree of priority in order in a round robin mode.

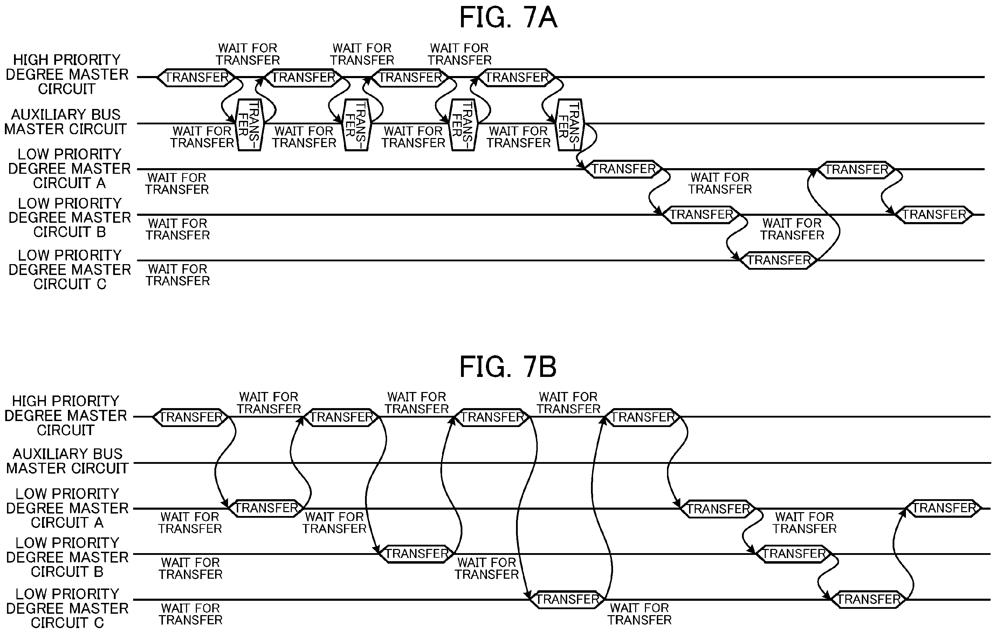

Conventionally, in a case where a high priority degree master circuit performs burst transfer for a plurality of times, even when a degree of priority is set in such a way as to prioritize data transfer of the high priority degree master circuit, data transfer of a low priority degree master circuit sometimes interrupts between one piece and one piece of the burst transfer for the plurality of times (as illustrated in FIG. 7B described below). In such a case, the auxiliary bus master circuit 100 according to the present disclosure is a circuit for disabling the low priority degree master circuit 300 from acquiring an access right to a bus, and preventing transfer of the low priority degree master circuit 300 from interrupting between one piece and one piece of the burst transfer for the plurality of times (as illustrated in FIG. 7A described below). Therefore, in the system 500, a higher degree of priority than the low priority degree master circuit (for example, the same degree of priority as the high priority degree master circuit 200) is set as a degree of priority of a bus access right of the auxiliary bus master circuit 100.

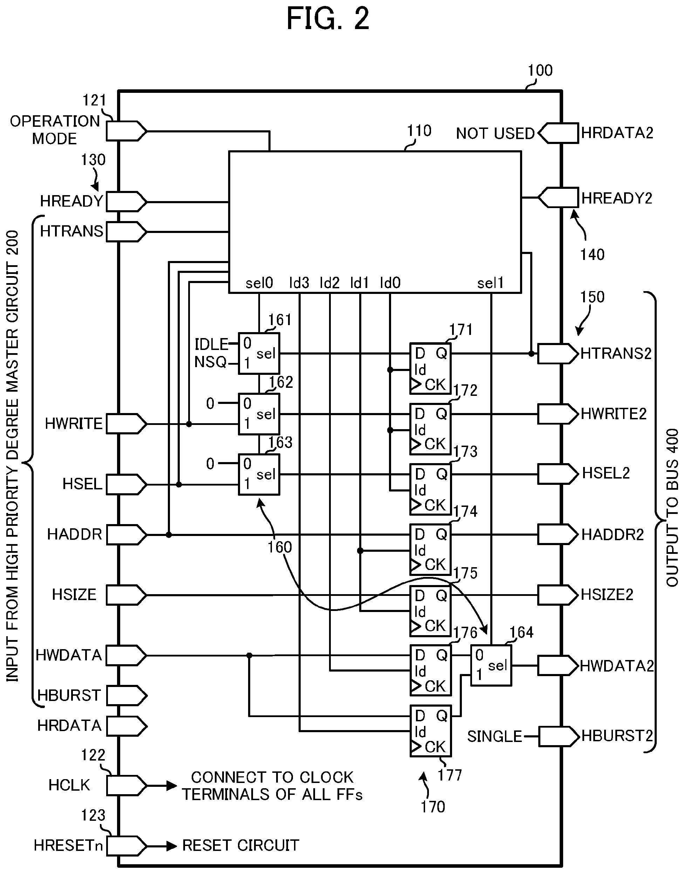

As illustrated in FIG. 2, the auxiliary bus master circuit 100 includes a control circuit 110, a plurality of selectors (selectors 161, 162, 163, and 164), a plurality of D flip-flops having a load function (ldD-FFs 171, 172, 173, 174, 175, 176, and 177) inside the auxiliary bus master circuit 100. Note that the plurality of selectors 161, 162, 163, and 164 included in the auxiliary bus master circuit 100 is referred to as a selector 160, and the plurality of ldD-FFs 171, 172, 173, 174, 175, 176, and 177 is referred to as an ldD-FF 170.

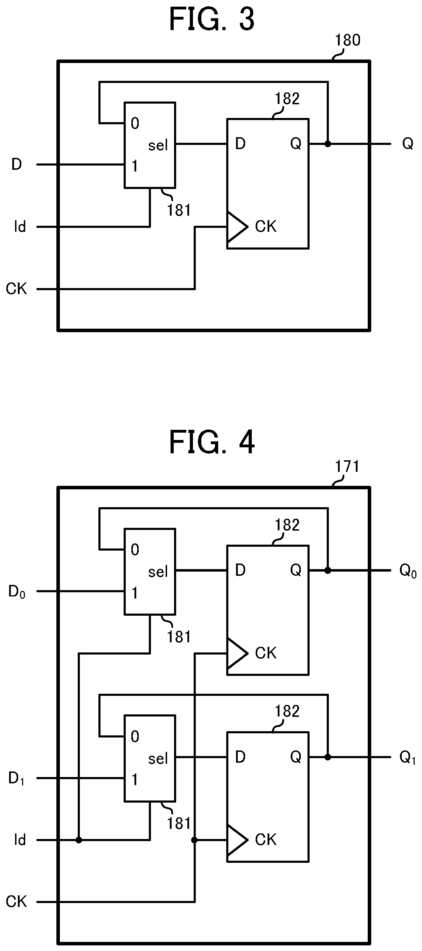

The D flip-flop having the load function is a logic circuit that loads (incorporates) an input value of a D terminal when a signal is input to a load (ld) terminal (for example, when ld = 1 (HIGH)), and latches the input value. As illustrated in FIG. 3, for example, the D flip-flop having the load function can be constituted from a selector 181 and a normal D flip-flop 182. In the D flip-flop having the load function (ldD-FF 180) illustrated in FIG. 3, an input value of a D terminal is loaded (incorporated) into the D flip-flop 182 inside when HIGH is input to a load (ld) terminal, and the input value is latched (held).

Returning to FIG. 2, the auxiliary bus master circuit 100 includes, as an input terminal, an operation mode terminal 121 to which a signal for switching an operation mode of the control circuit 110 is input, a bus clock terminal 122 to which a bus clock (HCLK) signal is input, a bus reset terminal 123 to which a bus reset (HRESETn) signal is input, a high priority degree master signal acquisition terminal 130 to which a signal (a signal described in the AMBA specification sheet described above, such as HREADY, HTRANS, and HWRITE, which is referred to as a high priority degree master signal) exchanged by the high priority degree master circuit 200 through the bus 400 is input, a bus input terminal 140 to which a signal from the bus 400 is input, and a bus output terminal 150 that outputs a signal to the bus 400.

As schematically illustrated in FIG. 1, the bus 400 includes (1) a first bus line group 400A that exchanges a control signal including a high priority degree master transfer type (HTRANS) signal, a high priority degree master transfer direction (HWRITE) signal, a high priority degree master slave selection (HSEL) signal, and a high priority degree master transfer size (HSIZE) signal that are each output from the high priority degree master circuit 200, a high priority degree master preparation completion (HREADY) signal input to the high priority degree master circuit 200, a high priority degree master address bus (HADDR) signal output from the high priority degree master circuit 200, a high priority degree master writing data bus (HWDATA) signal output from the high priority degree master circuit 200, and a high priority degree reading data bus (HRDATA) signal input to the high priority degree master circuit 200, (2) a second bus line group 400B that exchanges a control signal including an auxiliary bus master transfer type (HTRANS2) signal, an auxiliary bus master transfer direction (HWRITE2) signal, an auxiliary bus master slave selection (HSEL2) signal, an auxiliary bus master transfer size (HSIZE2) signal, and an auxiliary bus master transfer mode (HBURST2) signal that are each output from the auxiliary bus master circuit 100, an auxiliary bus master preparation completion (HREADY2) signal input to the auxiliary bus master circuit 100, an auxiliary bus master address bus (HADDR2) signal output from the auxiliary bus master circuit 100, an auxiliary bus master writing data bus (HWDATA2) signal output from the auxiliary bus master circuit 100, and an auxiliary bus master reading data bus (HRDATA2) signal input to the auxiliary bus master circuit 100, and (3) a third bus line group 400C that exchanges a control signal including a transfer type (HTRANS3) signal, a low priority degree master transfer direction (HWRITE3) signal, a low priority degree master slave selection (HSEL3) signal, a low priority degree master transfer size (HSIZE3) signal, and a transfer mode (HBURST3) signal that are each output from the low priority degree master circuit 300, a low priority degree master preparation completion (HREADY3) signal input to the low priority degree master circuit 300, a low priority degree master address bus (HADDR3) signal output from the low priority degree master circuit 300, a low priority degree master writing data bus (HWDATA3) signal output from the low priority degree master circuit 300, and a low priority degree reading data bus (HRDATA3) signal input to the low priority degree master circuit 300.

Herein, the first bus line group 400A is connected to the auxiliary bus master circuit 100 in such a way that the control signal, the high priority degree master address bus (HADDR) signal, and the high priority degree master writing data bus (HWDATA) signal that are each output from the high priority degree master circuit 200, and the high priority degree master preparation completion (HREADY) signal input to the high priority degree master circuit 200 are input to the auxiliary bus master circuit 100.

Note that, in FIG. 2, a bus clock signal is input to clock terminals of all of the ldD-FFs 170 and clock terminals of all of flip-flops in the auxiliary bus master circuit 100 including a flip-flop (not illustrated) in the control circuit 110. The auxiliary bus master circuit 100 is reset by a bus reset signal. A signal (NONSEQUENTIAL) described as "NONSEQ" as a transfer type in the ARM specification sheet is described as "NSQ" due to a space in the drawings such as FIG. 2. NONSEQ means first burst transfer or single transfer.

The control circuit 110 accepts, as a control input signal, an operation mode signal, the high priority degree preparation completion (HREADY) signal, the high priority degree master transfer type (HTRANS) signal, the high priority degree master address buss (HADDR) signal, the high priority degree master slave selection (HSEL) signal, the high priority degree master transfer direction (HWRITE) signal, the auxiliary bus master preparation completion (HREADY2) signal, and the auxiliary bus master transfer type (HTRANS2) signal.

Then, the control circuit 110 outputs, as a control output signal, a zero selector (sel0) signal, a first selector (sel1) signal, a zero load (ld0) signal, a first load (ld1) signal, a second load (ld2) signal, and a third load (ld3) signal, and controls the selector 160 and the ldD-FF 170 included in the auxiliary bus master circuit 100. The control circuit 110 controls, by the control output signal, a timing at which each ldD-FF 170 latches a signal such as the high priority degree master signal and a timing at which the latched signal is output from the bus output terminal 150.

Note that the control input signal and the control output signal may be a signal of 1 bit or a signal of multibits according to a kind of a signal. For example, the high priority degree master transfer type (HTRANS) signal is a signal of 2 bits, and the high priority degree master address bus (HADDR) signal, the high priority degree master writing data bus (HWDATA) signal, and the high priority degree reading data bus (HRDATA) signal are each a signal of 32 bits. In the ldD-FF 170 described in FIG. 2, a difference in bit number to be input is not distinguished (in order to prevent complicatedness), but, in the ldD-FF 170 to which a signal of multibits is input, a Q terminal and a D terminal actually support multibits. For example, as illustrated in FIG. 4, the ldD-FF 171 to and from which a signal of 2 bits is input and output is constituted from two selectors 181 and two normal D flip-flops 182 as 2 bits. Similarly, the ldD-FF 170 supporting a greater bit number is constituted from the plurality of selectors 181 and normal D flip-flops 182.

The auxiliary bus master circuit 100 always outputs SINGLE (single transfer mode) as the auxiliary bus master transfer mode (HBURST2) signal. Thus, the auxiliary bus master circuit 100 always performs single transfer regardless of the transfer mode (HBURST) signal output from the high priority degree master circuit 200.

In other words, the auxiliary bus master circuit 100 acquires a signal exchanged by the high priority degree master circuit 200 through the bus 400, latches the signal by the ldD-FF 170, and controls, by the control circuit 110, a latch timing of the ldD-FF 170 and an output timing to the bus 400. In this way, immediately after the high priority degree master circuit 200 starts data transfer, the auxiliary bus master circuit 100 is to perform single transfer of dummy data. Thus, while the high priority degree master circuit 200 performs continuous data transfer, the low priority degree master circuit 300 can be prevented from acquiring the access right to the bus 400.

An operation of the control circuit 110 is described in more detail. Of the signals output from the control circuit 110, the zero selector (sel0) signal and the zero load (ld0) signal are used for incorporating (loading), into the ldD-FFs 171, 172, and 173, data for outputting the auxiliary bus master transfer type (HTRANS2) signal, the auxiliary bus master transfer direction (HWRITE2) signal, and the auxiliary bus master slave selection (HSEL2) signal of the auxiliary bus master circuit 100, based on the high priority degree master preparation completion (HREADY) signal and the high priority degree master transfer type (HTRANS) signal of the high priority degree master circuit 200. The first load (ld1) signal is used for incorporating, into each of the ldD-FF 174 and ldD-FF 175, the high priority degree master address bus (HADDR) signal acquired from the high priority degree master circuit 200 and the high priority degree transfer size (HSIZE) signal acquired from the high priority degree master circuit 200 in order to output each of the high priority degree master address bus (HADDR) signal as the auxiliary master address bus (HADDR2) signal of the auxiliary bus master circuit 100 and the high priority degree transfer size (HSIZE) signal as the auxiliary bus master transfer size (HSIZE2) signal of the auxiliary bus master circuit 100.

Of the signals output from the control circuit 110, the second load (ld2) signal, the third load (ld3) signal, and the first selector (sel1) signal are used for adjusting a timing for incorporating the high priority degree master writing data bus (HWDATA) signal acquired from the high priority degree master circuit 200 into the ldD-FF 176 or the ldD-FF 177, and outputting the high priority degree master writing data bus (HWDATA) signal as the auxiliary bus master writing data bus (HWDARA2) signal of the auxiliary bus master circuit 100.

The auxiliary bus master circuit 100 starts data transfer after the high priority degree master circuit 200 completes data transfer for writing, but, at this time, the auxiliary bus master circuit 100 writes (as dummy data) data written by the high priority degree master circuit 200 into an address in which the high priority degree master circuit 200 performs writing immediately before. In this way, the auxiliary bus master circuit 100 writes already written data into the same address, and thus bus access can be performed without having any sort of influence on a device (such as the storage 520) connected to the bus 400. In order to perform such data transfer, even when the high priority degree master writing data bus (HWDATA) signal of the high priority degree master circuit 200 is updated, a signal before the update needs to be output as the auxiliary bus master writing data bus (HWDATA2) signal of the auxiliary bus master circuit 100.

Thus, the high priority degree master writing data bus (HWDATA) signal of the high priority degree master circuit 200 is loaded alternately into the ldD-FF 176 and the ldD-FF 177, and a signal before update is output as the auxiliary bus master writing data bus (HWDATA2) signal. In order to control an output of a signal in such a manner, the control circuit 110 regularly inverts a value of the first selector (sel1) signal, and determines which of the second load (ld2) signal and the third load (ld3) signal is to be HIGH according to a value of the first selector (sel1) signal.

The operation mode signal is a signal for switching between operation and stop of the auxiliary bus master circuit 100, and includes information of a total of 36 bits of threshold value address information (32 bits), threshold value address condition information (2 bits), and transfer direction condition information (2 bits).

A threshold value address is set by the threshold value address information. Then, the auxiliary bus master circuit 100 switches whether to be in operation when "address indicated by address bus signal ≥ threshold value address" by whether a first bit of the threshold value address condition information is 1 (HIGH) or 0 (LOW), and switches whether to be in operation when "address indicated by address bus signal < threshold value address" by whether a second bit of the threshold value address condition information is HIGH or LOW. In this way, for example, the auxiliary bus master circuit 100 can be put in operation and the like only when a device disposed in a certain specific address performs data transfer.

The auxiliary bus master circuit 100 switches whether to be in operation when reading is performed (the high priority degree master transfer direction (HWRITE) signal is LOW) by whether a first bit of the transfer direction condition information is HIGH or LOW, and switches whether to be in operation when writing is performed (the high priority degree master transfer direction (HWRITE) signal is HIGH) by whether a second bit of the transfer direction condition information is HIGH or LOW. In this way, for example, the auxiliary bus master circuit 100 can be put in operation and the like only when data transfer for reading is performed.

The auxiliary bus master circuit 100 starts a control sequence when the zero selector (sel0) signal of the control circuit 110 becomes HIGH. However, when an operation of the auxiliary bus master circuit 100 is stopped based on a condition set by the operation mode signal, the zero selector (sel0) signal is fixed to LOW, and the control sequence does not occur. As a result, an output terminal of the auxiliary bus master circuit 100 is held in an operation stop state, and an operation of the auxiliary bus master circuit 100 is stopped.

In an operation state, the auxiliary bus master circuit 100 incorporates a signal from the high priority degree master signal acquisition terminal 130 and latches (holds) the signal, and, immediately after the high priority degree master circuit 200 completes bus access, the auxiliary bus master circuit 100 outputs the signal from the bus output terminal 150 to the bus 400 in such a way that the bus access right can be acquired. In this way, the bus access right can be prevented from being acquired by the low priority degree master circuit group, and the high priority degree master circuit 200 (and the auxiliary bus master circuit 100) can occupy the bus.

To describe an overall of the mechanism in a case of writing data transfer, the auxiliary bus master circuit 100 incorporates and latches the high priority degree master address bus (HADDR) signal at a timing of switching of a clock in the bus clock (HCLK) signal (for example, switching from LOW to HIGH) when the high priority degree master transfer type (HTRANS) signal output from the high priority degree master circuit 200 is NONSEQ and the high priority degree master preparation completion (HREADY) signal is HIGH. After latching, the auxiliary bus master circuit 100 sets, as NONSEQ, the auxiliary bus master transfer type (HTRANS2) signal to be output to the bus 400 at a timing of switching of the clock in the bus clock (HCLK) signal (the same switching as switching at the time of latch of the high priority degree master address bus (HADDR) signal, for example, switching from LOW to HIGH), and outputs the held high priority degree master address bus (HADDR) signal as the auxiliary bus master address bus (HADDR2) signal. Then, the auxiliary bus master circuit 100 incorporates and latches the high priority degree master writing data bus (HWDATA) signal output from the high priority degree master circuit 200, and outputs, as the auxiliary bus master writing data bus (HWDATA2) signal, the latched high priority degree master writing data bus (HWDATA) signal in a data phase of the auxiliary bus master circuit 100, that is, at a timing of switching of a next clock in the bus clock (HCLK) signal (for example, switching from LOW to HIGH) when the auxiliary bus master transfer type (HTRANS2) signal is NONSEQ and the auxiliary bus master preparation completion (HREADY2) signal has been switched from LOW to HIGH. Herein, switching of the next clock in the bus clock (HCLK) signal is switching after one cycle of the bus clock (HCLK) signal, and indicates only switching from LOW to HIGH or only switching from HIGH to LOW.

As described above, the arbiter in the system 500 gives the access right to the bus 400 to the bus master that outputs the access request signal. Therefore, when the access request signal is output from the high priority degree master circuit 200, the auxiliary bus master circuit 100 incorporates the signal, and outputs the access request signal immediately after the high priority degree master circuit 200, and thus the auxiliary bus master circuit 100 can acquire the access right to the bus 400 after the high priority degree master circuit 200 ends data transfer.

In the present embodiment, each bus master requests the access right from the bus 400 when each bus master outputs NONSEQ as the transfer type (HTRANS) signal. Therefore, an output of NONSEQ as the auxiliary bus master transfer type (HTRANS2) signal from the auxiliary bus master circuit 100 corresponds to an output of the access request signal. Further, an output of NONSEQ as the high priority degree master transfer type (HTRANS) signal from the high priority degree master circuit 200 corresponds to an output of a signal for requesting an access right from the bus 400 by the high priority degree master circuit 200, and the signal is also referred to as a high priority degree master request signal in order to be distinguished from the access request signal output from the auxiliary bus master circuit 100.

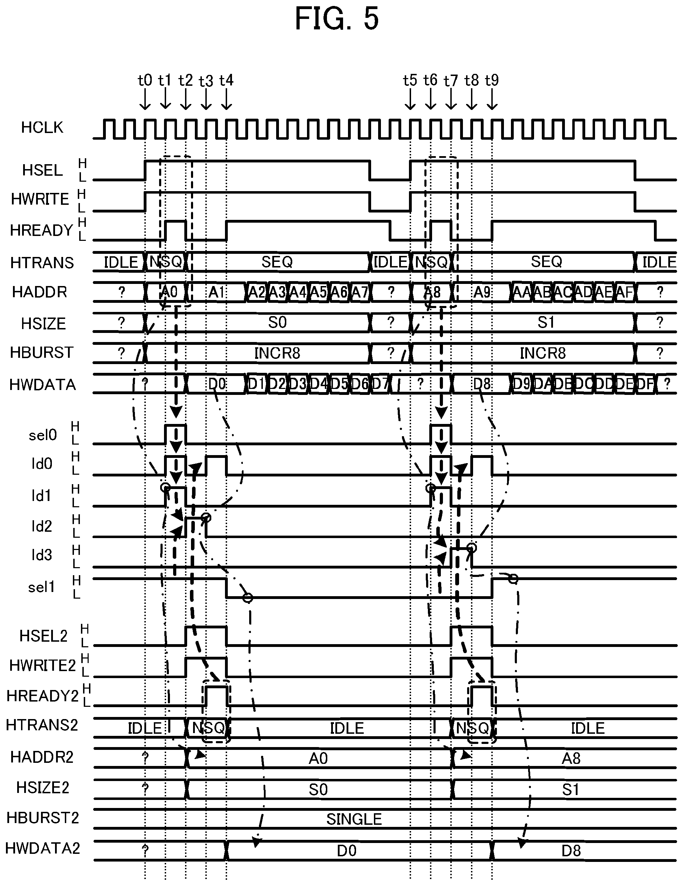

Next, an operation of the control circuit 110 when the high priority degree master circuit 200 performs writing on the storage 520 by continuous burst transfer is described with reference to FIG. 5.

As a premise, a bus access right having a high degree of priority is set in the high priority degree master circuit 200, and thus it is assumed that the bus access right can be acquired when the high priority degree master circuit 200 starts burst transfer for writing at a first point in time (a timing t0 in FIG. 5 as one of timings of switching from LOW to HIGH in the bus clock (HCLK) signal). It is also assumed that an address in which burst transfer starts is A0, and A1, A2, and... subsequently continue. It is also assumed that data of the address A0 are D0, and data of an address Ax are subsequently Dx. It is also assumed that the high priority degree transfer size (HSIZE) signal continues to be S0 (for example, a half word (16 bits)), S1, and... for eight addresses Ax herein, and the transfer mode (HBURST) is INCR8 (increment burst transfer mode of 8 beats).

Then, at the timing t0, in order to start burst transfer for writing from the address A0, the high priority degree master circuit 200 sets the high priority degree master transfer direction (HWRITE) signal to be HIGH (indicating writing transfer), sets the high priority degree master transfer type (HTRANS) signal to be NONSEQ, and outputs A0 to the high priority degree master address bus (HADDR) signal. At this time, the high priority degree master slave selection (HSEL) signal is also output based on a content of the high priority degree master address bus (HADDR) signal at the timing t0 (since the HSEL signal is combined decoding of an address bus).

Then, at a timing t1 being a switching timing of a next clock after the timing t0 in the bus clock (HCLK) signal, the high priority degree master circuit 200 acquires the bus access right, and the high priority degree master preparation completion (HREADY) signal from the bus 400 becomes HIGH.

As indicated by a thick dashed line and a portion surrounded by a dashed line at the timing t1 in FIG. 5, when the high priority degree master preparation completion (HREADY) signal from the bus 400 becomes HIGH, the control circuit 110 sets each of the zero selector (sel0) signal, the zero load (ld0) signal, and the first load (ld1) signal to be HIGH during one clock (one cycle of the bus clock (HCLK) signal) in response to the high priority degree master slave selection (HSEL) signal and the high priority degree master transfer direction (HWRITE) signal being HIGH and the high priority degree master transfer type (HTRANS) signal being NONSEQ.

Then, by the first load (ld1) signal becoming HIGH, A0 being the high priority degree master address bus (HADDR) signal of the high priority degree master circuit 200 is loaded and latched in the ldD-FF 174, and S0 being the high priority degree transfer size (HSIZE) signal of the high priority degree master circuit 200 is loaded and latched in the ldD-FF 175. Then, at a timing t2 being a timing of switching of a next clock after the timing t1, as indicated by a dotand-dash line extending from the address A0 in the portion surrounded by a dashed line at the timing t1, A0 is latched and also output from the ldD-FF 174 as the auxiliary bus master address bus (HADDR2) signal of the auxiliary bus master circuit 100. At the same time, that is, at the timing t2, S0 is latched and also output from the ldD-FF 175 as the auxiliary bus master transfer size (HSIZE2) signal of the auxiliary bus master circuit 100.

At the timing t1, the zero selector (sel0) signal and the zero load (ld0) signal become HIGH, and thus NONSEQ is loaded and latched in the ldD-FF 171. At the timing t2 being the switching timing of the next clock after the timing t1, NONSEQ is latched and also output as the auxiliary bus master transfer type (HTRANS2) signal of the auxiliary bus master circuit 100. Similarly, at the timing t1, the high priority degree master transfer direction (HWRITE) signal and the high priority degree master slave selection (HSEL) signal of the high priority degree master circuit 200 are also loaded and latched in the ldD-FF 172 and the ldD-FF 173. At the timing t2 after the timing t1, the signals are latched and also output as the auxiliary bus master transfer direction (HWRITE2) signal and the auxiliary bus master slave selection (HSEL2) signal of the auxiliary bus master circuit 100.

In this way, the auxiliary bus master transfer type (HTRANS2) signal of NONSEQ is output from the auxiliary bus master circuit 100 to the bus 400, and thus the auxiliary bus master circuit 100 requests the access right from the bus 400 immediately after the high priority degree master circuit 200 starts burst transfer (the timing t2 being the switching timing of the next clock after the timing t1). In the auxiliary bus master circuit 100 similarly to the high priority degree master circuit 200, a degree of priority of the access right to the bus 400 is set higher than the other low priority degree master circuit 300. Thus, even when the low priority degree master circuit 300 requests the access right to the next bus 400, the arbiter preferentially gives the access right to the bus 400 to the auxiliary bus master circuit 100 in response to a request for the access right to the next bus 400 while the high priority degree master circuit 200 performs burst transfer.

Then, the first selector (sel1) signal has a value regularly inverted, but is HIGH at the timing t1, and thus the control circuit 110 sets the second load (ld2) signal to be HIGH at the timing t2 being the switching timing of the next clock after the timing t1 in response to the first load (ld1) signal and the first selector (sel1) signal at the timing t1.

Then, D0 being the high priority degree master writing data bus (HWDATA) signal of the high priority degree master circuit 200 is loaded and latched in the ldD-FF 176. However, at this point in time, the first selector (sel1) signal is still HIGH, and thus an output from the ldD-FF 177 (which is a previous data bus signal and is described as "?" in FIG. 5) continues to be output as the auxiliary bus master writing data bus (HWDATA2) signal of the auxiliary bus master circuit 100 until a timing t4 at which the first selector (sel1) signal becomes LOW.

Then, at a timing (timing t3) at which the auxiliary bus master preparation completion (HREADY2) signal of the auxiliary bus master circuit 100 being transferred from the bus 400 is switched from LOW to HIGH, the control circuit 110 sets the zero load (ld0) signal to be HIGH during only one clock (one cycle of the bus clock (HCLK) signal) in response to the auxiliary bus master transfer type (HTRANS2) signal being NONSEQ. At this time, the zero selector (sel0) signal is LOW, and thus IDLE is loaded and latched in the IdD-FF 171 and LOW is loaded and latched in the ldD-FF 172 and the ldD-FF 173 from the selectors 161, 162, and 163. Then, the latched signals are output at the switching timing of the clock. In other words, at the timing t4 being the next clock switching after the timing t3, IDLE is output as the auxiliary bus master transfer type (HTRANS2) signal of the auxiliary bus master circuit 100 and LOW is output as the auxiliary bus master transfer direction (HWRITE2) signal and the auxiliary bus master slave selection (HSEL2) signal.

Then, the first selector (sel1) signal becomes LOW at the timing t4, and thus D0 latched in the ldD-FF 176 is output as the auxiliary bus master writing data bus (HWDATA2) signal of the auxiliary bus master circuit 100. In other words, the auxiliary bus master circuit 100 writes D0 being dummy data to the address A0 by single transfer.

Note that, as described above, the auxiliary bus master circuit 100 always outputs SINGLE (single transfer mode) as the auxiliary bus master transfer mode (HBURST2) signal. At the timing 4, the auxiliary bus master circuit 100 switches the auxiliary bus master transfer type (HTRANS2) signal from NONSEQ to IDLE indicating that there are no data for burst transfer. Therefore, immediately after the auxiliary bus master circuit 100 that has acquired the access right to the bus 400 performs single transfer on D0 output to the auxiliary bus master writing data bus (HWDATA2) signal, the auxiliary bus master circuit 100 passes the access right to the bus 400 to the other bus master. At the timing t2, the high priority degree master circuit 200 switches the high priority degree master transfer type (HTRANS) signal from NONSEQ indicating first burst transfer to SEQ indicating that there is a remaining portion of burst transfer, outputs the high priority degree master address bus (HADDR) signal in order of the addresses A1, A2, and A3, outputs the last address A7 as one of a plurality of address blocks to the bus 400, and then temporarily switches the high priority degree master transfer type (HTRANS) signal from SEQ to IDLE indicating that there is no address for burst transfer.

Then, when the high priority degree master circuit 200 completes burst transfer of the data D7 corresponding to the address A7, the high priority degree master circuit 200 sets, to be HIGH (indicating writing transfer), the high priority degree master transfer direction (HWRITE) signal that has been temporarily switched to LOW, switches the high priority degree master transfer type (HTRANS) signal from IDLE to NONSEQ, and outputs A8 to the high priority degree master address bus (HADDR) signal, in order to then start burst transfer for writing from the next address A8 at a timing t5. Subsequently, a similar signal is output from the auxiliary bus master circuit 100 at timings t5, t6, t7, t8, and t9 corresponding to the above-described timings t0, t1, t2, t3, and t4, respectively. Note that, at and after the timing t5, the high priority degree transfer size (HSIZE) is switched from S0 to S1, but may have the same size (S0 = S1).

In this way, the auxiliary bus master circuit 100 outputs the auxiliary bus master transfer type (HTRANS2) signal of NONSEQ as the access request signal to the bus 400 at the same timing (timing t2 of the same clock) as the timing (timing t2) at which the high priority degree master transfer type (HTRANS) signal of NONSEQ is acquired as the high priority degree master request signal from the high priority degree master circuit 200. Further, when the auxiliary bus master circuit 100 acquires the high priority degree master request signal, the auxiliary bus master circuit 100 acquires and latches the high priority degree master address signal being the high priority degree master address bus (HADDR) signal (signal indicating an address value accessed by the high priority degree master circuit 200), and also outputs, to the bus 400, the acquired high priority degree master address signal as an address signal being the auxiliary bus master address bus (HADDR2) signal (signal indicating an address value accessed by the auxiliary bus master circuit 100) at the same timing (timing t2 of the same clock) as the timing (timing t2) at which the high priority degree master address signal is acquired.

Then, at the timing t3 (timing t3 after a predetermined clock (for example, after one clock cycle) of the timing (timing t2) at which the high priority degree master address signal is acquired), the auxiliary bus master circuit 100 acquires and latches the high priority degree master data signal being the high priority degree master writing data bus (HWDATA) signal (signal indicating a data value written by the high priority degree master circuit 200) of the high priority degree master circuit 200, and outputs, to the bus 400, the latched signal as the auxiliary bus master writing data bus (HWDATA2) signal (signal indicating a data value written by the auxiliary bus master circuit) after a predetermined clock of the timing t3 at which the auxiliary bus master preparation completion (HREADY2) signal from the bus 400 becomes HIGH (for example, at the timing t4 after one clock cycle). When the high priority degree master circuit 200 performs data transfer by the output of the signals, the auxiliary bus master circuit 100 performs data transfer of dummy data on the same address after a predetermined clock, and thus the bus 400 can be occupied, and the low priority degree master circuit 300 can be prevented from interrupting access to the bus 400.

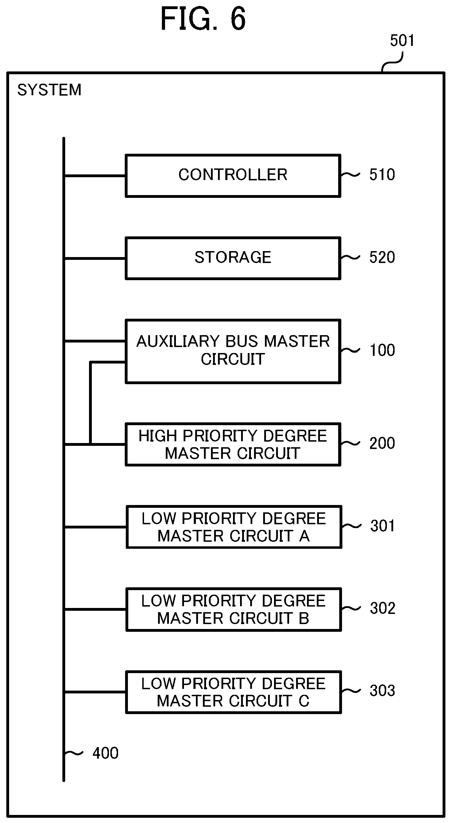

A bus access example when the auxiliary bus master circuit 100 functions in a system 501 illustrated in FIG. 6 is described with reference to FIG. 7A. However, as illustrated in FIG. 6, the system 501 includes the high priority degree master circuit 200 and the auxiliary bus master circuit 100 that have a high degree of priority, and also three bus masters having a low degree of priority (a low priority degree master circuit A301, a low priority degree master circuit B302, and a low priority degree master circuit C303, which are collectively referred to as a "low priority degree master circuit group" below). When bus accesses of a plurality of bus masters having the same degree of priority compete with each other, an access right to a bus is acquired in a round robin mode between the plurality of bus masters.

In this example, it is assumed that the high priority degree master circuit 200 needs to continuously perform four pieces of burst transfer, and the low priority degree master circuit group also possesses a great amount of data needed to be transferred. For example, when the high priority degree master circuit 200 processes stream data of four channels in a time-division manner, such four pieces of continuous burst transfer are generally performed.

In the system 501, a bus master having a high degree of priority is the high priority degree master circuit 200 and the auxiliary bus master circuit 100, but the auxiliary bus master circuit 100 does not possess data needed to be transferred, and thus the high priority degree master circuit 200 starts first burst transfer at a first point in time.

Then, subsequently, as illustrated in FIG. 5, the auxiliary bus master circuit 100 is to perform single transfer of dummy data, based on a signal output from the high priority degree master circuit 200. Thus, as illustrated in FIG. 7A, the auxiliary bus master circuit 100 is brought into a transfer waiting state slightly later than the low priority degree master circuit group. However, the auxiliary bus master circuit 100 has a higher degree of priority than the low priority degree master circuit group, and thus acquires a bus access right and performs single transfer after the high priority degree master circuit 200 completes burst transfer.

Then, the high priority degree master circuit 200 is brought into a transfer waiting state in order to perform next burst transfer while the auxiliary bus master circuit 100 performs single transfer. Then, the high priority degree master circuit 200 has a higher degree of priority than the low priority degree master circuit group, and thus acquires a bus access right and performs burst transfer after the auxiliary bus master circuit 100 completes single transfer.

Then, when the high priority degree master circuit 200 completes all continuous burst transfer, the low priority degree master circuit group successively starts transfer in a round robin mode.

On the other hand, in the system 501, when the auxiliary bus master circuit 100 is not put in operation, similarly to the related art, one of bus masters included in the low priority degree master circuit group acquires a bus access right after the high priority degree master circuit 200 completes burst transfer as illustrated in FIG. 7B. Thus, as compared to the case where the auxiliary bus master circuit 100 is put in operation (FIG. 7A), it takes more time until the high priority degree master circuit 200 completes continuous burst transfer. Therefore, when the high priority degree master circuit 200 performs data transfer continued for a plurality of times by putting the auxiliary bus master circuit 100 in operation, it is clear that the data transfer can be completed in a short time.

Note that the operation of the auxiliary bus master circuit 100 during continuous burst transfer for writing is described in FIG. 5, but the auxiliary bus master circuit 100 also effectively functions in continuous burst transfer for reading and continuous single transfer.

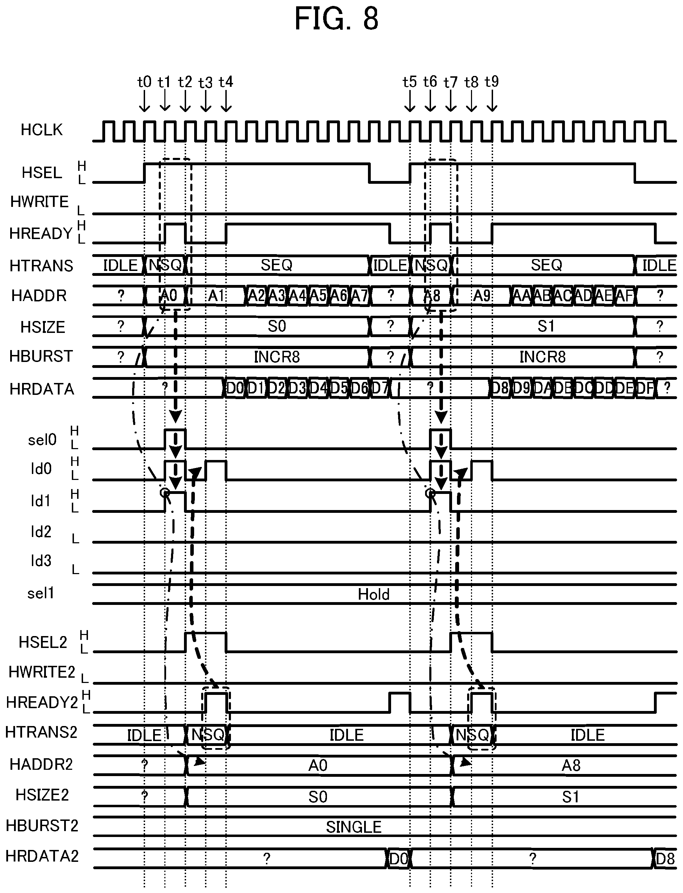

For example, an operation of the control circuit 110 when the high priority degree master circuit 200 performs reading on the storage 520 by continuous burst transfer is described with reference to FIG. 8.

Similarly to the case in FIG. 5, a bus access right having a high degree of priority is set in the high priority degree master circuit 200, and thus it is assumed that the bus access right can be acquired when the high priority degree master circuit 200 starts burst transfer for reading at a first point in time (timing t0 in FIG. 8). It is also assumed that an address in which burst transfer starts is A0, and A1, A2, and... subsequently continue. It is also assumed that data of the address A0 are D0, and data of an address Ax are subsequently Dx. It is also assumed that the high priority degree transfer size (HSIZE) continues to be S0 (for example, a half word (16 bits)), S1, and... for eight addresses Ax herein, and the transfer mode (HBURST) is INCR8 (increment burst transfer mode of 8 beats).

Then, at the timing t0, in order to start burst transfer for reading from the address A0, the high priority degree master circuit 200 sets the high priority degree master transfer direction (HWRITE) signal to be LOW (indicating reading transfer), sets the high priority degree master transfer type (HTRANS) signal to be NONSEQ, and outputs A0 to the high priority degree master address bus (HADDR) signal. At this time, the high priority degree master slave selection (HSEL) signal is also output based on a content of the high priority degree master address bus (HADDR) at the timing t0 (since the HSEL signal is combined decoding of an address bus).

Then, at a timing t1 being a switching timing of a next clock after the timing t0 in the bus clock (HCLK) signal, the high priority degree master circuit 200 acquires the bus access right, and the high priority degree master preparation completion (HREADY) signal from the bus 400 becomes HIGH.

As indicated by a thick dashed line and a portion surrounded by a dashed lineat the timing t1 in FIG. 8, when the high priority degree master preparation completion (HREADY) signal from the bus 400 becomes HIGH, the control circuit 110 sets each of the zero selector (sel0) signal, the zero load (ld0) signal, and the first load (ld1) signal to be HIGH during one clock (one cycle of the bus clock (HCLK) signal) in response to the high priority degree master slave selection (HSEL) signal being HIGH, the high priority degree master transfer direction (HWRITE) signal being LOW, and the high priority degree master transfer type (HTRANS) signal being NONSEQ.

Then, by the first load (ld1) signal becoming HIGH, A0 being the high priority degree master address bus (HADDR) signal of the high priority degree master circuit 200 is loaded and latched in the ldD-FF 174, and S0 being the high priority degree transfer size (HSIZE) signal of the high priority degree master circuit 200 is loaded and latched in the ldD-FF 175. Then, at a timing t2 being a timing of switching of a next clock after the timing t1, as indicated by a dotand-dash line extending from the address A0 in the portion surrounded by a dashed line at the timing t1, A0 latched at the timing t1 is output from the ldD-FF 174 as the auxiliary bus master address bus (HADDR2) signal of the auxiliary bus master circuit 100. At the same time, that is, at the timing t2, S0 is latched and also output from the ldD-FF 175 as the auxiliary bus master transfer size (HSIZE2) signal of the auxiliary bus master circuit 100.

At the timing t1, the zero selector (sel0) signal and the zero load (ld0) signal become HIGH, and thus NONSEQ is loaded and latched in the ldD-FF 171. At the timing t2 being the switching timing of the next clock after the timing t1, NONSEQ is latched and also output as the transfer type (HTRANS2) signal of the auxiliary bus master circuit 100. Similarly, at the timing t1, the high priority degree master transfer direction (HWRITE) signal and the high priority degree master slave selection (HSEL) signal of the high priority degree master circuit 200 are also loaded and latched in the ldD-FF 172 and the ldD-FF 173. At the timing t2 after the timing t1, the signals are latched and also output as the auxiliary bus master transfer direction (HWRITE2) signal and the auxiliary bus master slave selection (HSEL2) signal of the auxiliary bus master circuit 100.

In this way, the auxiliary bus master transfer type (HTRANS2) signal of NONSEQ is output from the auxiliary bus master circuit 100 to the bus 400, and thus the auxiliary bus master circuit 100 requests the access right from the bus 400 immediately after the high priority degree master circuit 200 starts burst transfer (the timing t2 being the switching timing of the next clock after the timing t1). In the auxiliary bus master circuit 100 similarly to the high priority degree master circuit 200, a degree of priority of the access right to the bus 400 is set higher than the other low priority degree master circuit 300. Thus, even when the low priority degree master circuit 300 requests the access right to the next bus 400, the arbiter preferentially gives the access right to the bus 400 to the auxiliary bus master circuit 100 in response to a request for the access right to the next bus 400 while the high priority degree master circuit 200 performs burst transfer.

When the high priority degree master transfer direction (HWRITE) signal of the high priority degree master circuit 200 is LOW, the auxiliary bus master writing data bus (HWDATA2) signal of the auxiliary bus master circuit 100 is not output, and thus the control circuit 110 does not need to control the first selector (sel1) signal, the second load (ld2) signal, and the third load (ld3) signal, and the values are fixed (held) in FIG. 8.

The high priority degree reading data bus (HRDATA) signal of the high priority degree master circuit 200 is D0, D1, ...and D7 being read by burst transfer from the storage 520, but is not used in the auxiliary bus master circuit 100. After the high priority degree master circuit 200 completes burst transfer, D0 is read as the auxiliary bus master reading data bus (HRDATA2) signal of the auxiliary bus master circuit 100, but is also not used in the auxiliary bus master circuit 100.

Then, at a timing (timing t3) at which the auxiliary bus master preparation completion (HREADY2) signal input to the auxiliary bus master circuit 100 from the bus 400 is switched from LOW to HIGH, the control circuit 110 sets the zero load (ld0) signal to be HIGH during only one clock (one cycle of the bus clock (HCLK) signal) in response to the auxiliary bus master transfer type (HTRANS2) signal being NONSEQ. At this time, the zero selector (sel0) signal is LOW, and thus IDLE is loaded and latched in the ldD-FF 171 and LOW is loaded and latched in the ldD-FFs 172 and 173 from the selectors 161, 162, and 163. Then, the latched signals are output at the switching timing of the next clock. In other words, at a timing t4 being the next clock switching after the timing t3, IDLE is output as the auxiliary bus master transfer type (HTRANS2) signal of the auxiliary bus master circuit 100 and LOW is output as the auxiliary bus master transfer direction (HWRITE2) signal and the auxiliary bus master slave selection (HSEL2) signal.

Note that, as described above, the auxiliary bus master circuit 100 always outputs SINGLE (single transfer mode) as the auxiliary bus master transfer mode (HBURST2) signal. Thus, also in a case of reading data transfer, the auxiliary bus master circuit 100 always performs single transfer regardless of the transfer mode (HBURST) of the high priority degree master circuit 200. Therefore, immediately after the auxiliary bus master circuit 100 that has acquired the access right to the bus 400 acquires D0 as the auxiliary bus master reading data bus (HRDATA2) signal (performs single transfer), the auxiliary bus master circuit 100 passes the access right to the bus 400 to the other bus master.

Then, when the high priority degree master circuit 200 completes burst transfer of the data D7 corresponding to the address A7, the high priority degree master circuit 200 keeps the high priority degree master transfer direction (HWRITE) signal LOW (indicating reading transfer), switches the high priority degree master transfer type (HTRANS) signal from IDLE to NONSEQ, and outputs A8 to the high priority degree master address bus (HADDR) signal, in order to then start burst transfer for reading from the next address A8 at a timing t5. Subsequently, a similar signal is output from the auxiliary bus master circuit 100 at timings t5, t6, t7, t8, and t9 corresponding to the above-described timings t0, t1, t2, t3, and t4, respectively.

In this way, it can also be confirmed in burst transfer for reading that the auxiliary bus master circuit 100 effectively functions.

As described above, by additionally connecting the auxiliary bus master circuit 100 to the bus 400 and the high priority degree master circuit 200 in the systems 500 and 501, and performing bus access of dummy data by the auxiliary bus master circuit 100, based on a bus access signal of the high priority degree master circuit 200, the high priority degree master circuit 200 (and the auxiliary bus master circuit) can temporarily occupy the access right to the bus 400. According to a simulation result, it has been found out that the auxiliary bus master circuit 100 functions and thus a data transfer time of the high priority degree master circuit 200 when the bus 400 is congested can be reduced by about 10 to 50 percent.

In AHB-Lite of the AMBA standards, data buses are independent for writing and reading, and a data transfer time in the high priority degree master circuit can be remarkably reduced when a request for writing access or a request for reading access occurs frequently in a short time in the low priority degree master circuit.

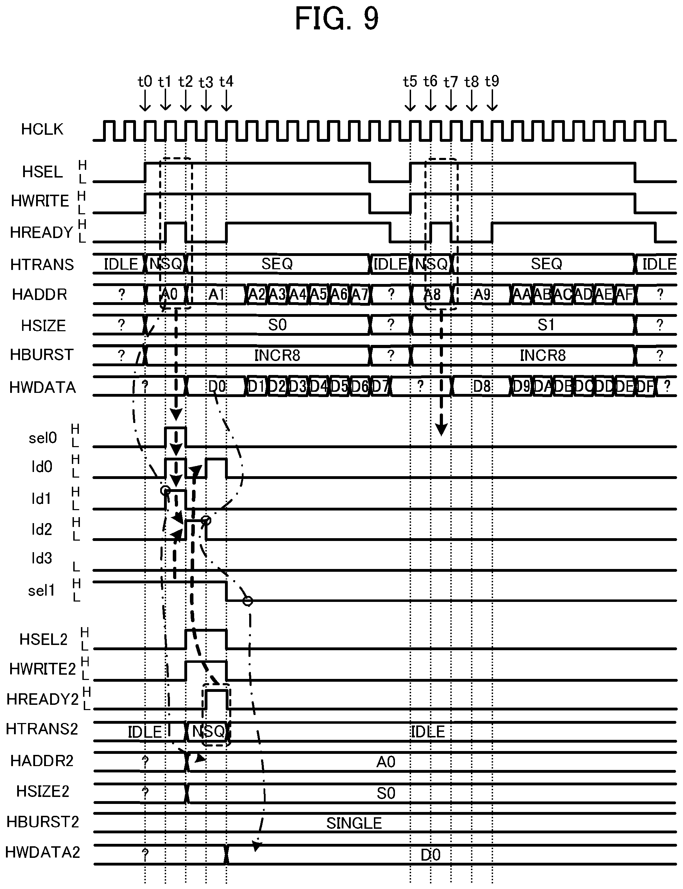

Note that an operation mode signal is input to the control circuit 110, but an operation of the auxiliary bus master circuit 100 can be stopped depending on a threshold value address, a threshold value address condition, and a transfer direction condition included in the operation mode signal. As one example, when a value of "A8" is set as a threshold value address and an operation is set in a case of "address indicated by address bus signal < threshold value address" as a threshold value address condition, as in one example of a time chart illustrated in FIG. 9, the auxiliary bus master circuit 100 is put in operation when the high priority degree master address bus (HADDR) signal of the high priority degree master circuit 200 is A0 (A0 < threshold value address) but is stopped in a case of A8.

An operation of the auxiliary bus master circuit 100 in this case is described with reference to FIG. 9. In this case, burst transfer is performed from A0 between timings t0 and t5, and thus the auxiliary bus master circuit 100 is in operation similarly to the case in FIG. 5. The high priority degree master address bus (HADDR) signal of the high priority degree master circuit 200 is A8 at the timing t5, and the threshold value address condition included in the operation mode signal is not satisfied, and thus an operation of the auxiliary bus master circuit 100 is stopped.

Then, the zero selector (sel0) signal is fixed at LOW at and after a timing t6, and a control sequence of the control circuit 110 does not start. Thus, the other zero load (ld0) signal, first load (ld1) signal, and the like are also fixed at LOW, and the auxiliary bus master transfer type (HTRANS2) signal of the auxiliary bus master circuit 100 continues to be IDLE. Therefore, the auxiliary bus master circuit 100 does not acquire the access right to the bus 400.

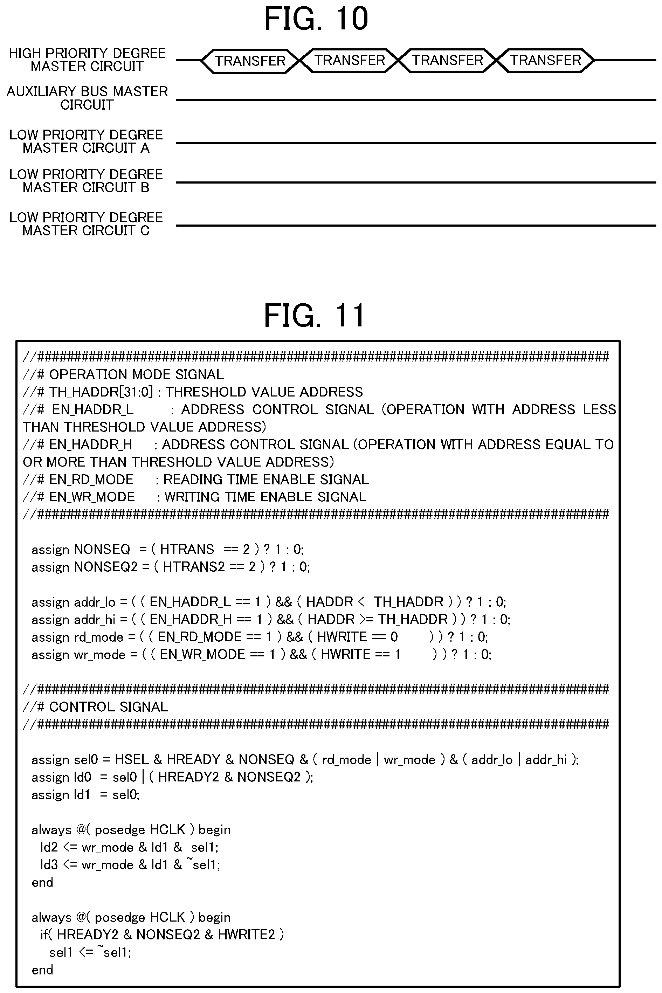

In a case where the low priority degree master circuit group does not possess data needed to be transferred, even when the auxiliary bus master circuit 100 is stopped, the high priority degree master circuit 200 can continuously perform burst transfer as illustrated in FIG. 10.

The auxiliary bus master circuit 100 always performs single transfer, and thus a time to occupy the bus 400 is short. Although a time during which the auxiliary bus master circuit 100 is put in operation is short, a time to occupy the bus 400 is generated as illustrated in FIG. 7A. Therefore, when it is clear that the high priority degree master circuit 200 can reliably continuously perform burst transfer, as illustrated in FIG. 10, continuous burst transfer of the high priority degree master circuit 200 can be further increased in speed by stopping an operation of the auxiliary bus master circuit 100 by an operation mode signal.

Note that, for the control sequence for the control circuit 110 described above to output the control output signal (such as zero selector (sel0) signal and the zero load (ld0) signal) according to the control input signal (such as the operation mode signal, the high priority degree master preparation completion (HREADY) signal, and the auxiliary bus master preparation completion (HREADY2) signal), even a beginner can design a control circuit from a time chart as long as he/she is a digital circuit designer. As one example, a description example of a minimum register transfer level (RTL) by a Verilog hardware description language (Verilog HDL) is illustrated in FIG. 11.

Note that the operation mode signal in the embodiment described above is described as a signal including information of a total of 36 bits of the threshold value address information (32 bits), the threshold value address condition information (2 bits), and the transfer direction condition information (2 bits), but this is merely one example of the operation mode signal. For example, the operation mode signal may be information of a total of 69 bits of threshold value address A information (32 bits), threshold value address B information (32 bits), threshold value address condition information (3 bits), and transfer direction condition information (2 bits) as threshold value address information.

How a threshold value address A and a threshold value address B are used in this example can be freely set. For example, the threshold value address A < the threshold value address B, and whether an operation is performed when "address indicated by address bus signal ≥ threshold value address B" can be switched by whether a first bit of the threshold value address condition is HIGH or LOW, whether an operation is performed when "threshold value address B > address indicated by address bus signal ≥ threshold value address A" can be switched by whether a second bit of the threshold value address condition is HIGH or LOW, and whether an operation is performed when "address indicated by address bus signal < threshold value address A" can be switched by whether a third bit of the threshold value address condition is HIGH or LOW.

In this way, the operation mode signal includes the plurality of threshold value addresses, and thus an operation of the auxiliary bus master circuit 100 can be more flexibly switched according to the address.

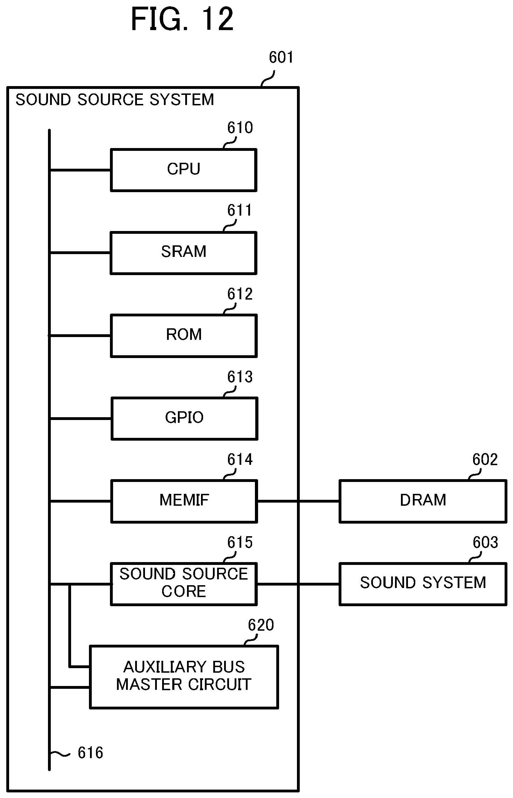

Next, a sound source system 601 illustrated in FIG. 12 is described as an example of applying the auxiliary bus master circuit 100 to an electronic musical instrument.

The sound source system 601 includes a sound source core 615 and an auxiliary bus master circuit 620 as a bus master having a bus access right having a high degree of priority. The auxiliary bus master circuit 620 has the same or equivalent circuit configuration and function to those of the auxiliary bus master circuit 100. In addition, a configuration of the sound source system 601 is similar to the configuration of a sound source system 1 illustrated in FIG. 1 in Unexamined Japanese Patent Application Publication No. 2023-140619.

However, a CPU 610, a RAM 611, a ROM 612, a general purpose input/output (GPIO) 613, a memory interface (MEMIF) 614, the sound source core 615, and a bus 616 included in the sound source system 601 respectively correspond to a CPU 10, a RAM 11, a ROM 12, a GPIO 13, a MEMIF 14, a core 15, and a bus 16 in Unexamined Japanese Patent Application Publication No. 2023-140619.

The sound source system 601 is connected to a dynamic RAM (DRAM) 602 and a sound system 603 outside. For example, a standard MIDI file (SMF) is stored in the DRAM 602. The sound system 603 includes a digital/analog (D/A) converter, an amplifier, a speaker, and the like, and digital musical sound data generated by the sound source core 615 are output from the speaker included in the sound system 603.

The sound source core 615 includes a digital signal processor (DSP), but, when a delay occurs in data transfer by the DSP, digital musical sound data cannot be normally output from the sound system 603 (for example, sound breaks or is distorted), and thus a higher degree of priority than the other bus master is set to a bus access right of the sound source core 615. Then, similarly to the sound source core 615, a higher degree of priority than the other bus master is also set to a bus access right of the auxiliary bus master circuit 620.

Then, when the sound source core 615 desires to continuously occupy a bus (for example, when a plurality of pieces of continuous burst transfer is performed), use of the bus by the other bus master is prevented by the auxiliary bus master circuit 620 being in operation in conjunction with the sound source core 615.

Therefore, by the sound source system 601 including the auxiliary bus master circuit 620, the sound source core 615 can perform a plurality of pieces of continuous data transfer without being interrupted by the other bus master, and thus digital musical sound data can be always normally output.

For example, the SRAM 611 built in the sound source system 601 is fast, and thus there is no problem when the auxiliary bus master circuit 100 is not in operation, and a case where the auxiliary bus master circuit 100 is desired to be put in operation only when access is made to the DRAM 602 outside is conceivable. In this case, by setting the threshold value address information and the threshold value address condition information of the operation mode signal, the auxiliary bus master circuit 100 can be put in operation only when access is made to the DRAM 602 outside.

Note that, in the embodiment described above, description is given on the assumption that specifications of the bus 400 are AHB-Lite, but specifications of the bus 400 are not limited to AHB-Lite. For example, the specifications may be AHB, or may be bus specifications other than AMBA.

In the present embodiment, an output of NONSEQ as the high priority degree master transfer type (HTRANS) signal is regarded as an output of the access request signal, but an output of the access request signal is not limited to an output of NONSEQ. As a result, all outputs of a signal for requesting an access right to the bus 400 from the arbiter can be regarded as an output of the access request signal.

In the present embodiment, when the high priority degree master circuit 200 performs data transfer for writing, the auxiliary bus master circuit 100 is assumed to perform single data transfer for writing of starting data (D0). However, depending on a system (for example, in a system that satisfies predetermined specifications in which a writable address is configured to be always readable and the like), the auxiliary bus master circuit 100 may perform single data transfer for reading on the same address. In other words, when the auxiliary bus master circuit 100 can access a bus by data transfer for reading, the auxiliary bus master circuit 100 may not perform data transfer for writing.

Note that, in the disclosure described above, "after a predetermined clock" is "after one clock cycle", but may be "after two or more clock cycles" although data transfer is slightly delayed as compared to "after one clock cycle".

The auxiliary bus master circuit in the present disclosure is not limited to only a sound source system as an electronic device, and can be applied to all electronic devices as long as the electronic devices include a computer that exchanges transfer data having a plurality of priority orders.

In the disclosure described above, the auxiliary bus master circuit may be able to be physically separated from the system, and the auxiliary bus master circuit may be connected as necessary to an interface of a bus in the system connected to the storage in the system.

In the present disclosure, unless otherwise specified, a term "at least" includes a plurality of combinations or the number equal to or more than an indicated number in such a way that, for example, "at least one of A, B, and C" means "(A), (B), (C), (A and B), (A and C), (B and C), or (A, B, and C)". For example, when C is plural, a term "at least one of A, B, and C" means "(A), (B), (at least one or more C), (A and B), (A and at least one or more C), (B and at least one or more C), or (A, B, and at least one or more C)". It is interpreted that a case where A is plural or a case where B is plural is also handled similarly to the case described above.

In the present disclosure, unless otherwise specified, terms "alternatively" and "or" are used to mention a non-exclusive matter (thing) in such a way that, for example, a term "A or B" means "any of (A but not B), (B but not A), and (A and B)".

The "same" used in the present disclosure is not limited to a strict meaning and is interpreted to include a range of extents to which a similar function may be expected.

## Claims

1. An auxiliary bus master circuit (100) that is connected to a bus (400) in a system (500) in which a high priority degree master circuit (200) having a bus access right having a high degree of priority and a low priority degree master circuit (300) having a bus access right having a lower degree of priority than the high priority degree master circuit (200) are connected to one bus (400) **characterized in that** the auxiliary bus master circuit (100) comprises
a control circuit (110) that outputs an access request signal for requesting an access right from the bus (400), based on a timing for outputting at least one of high priority degree master signals being signals exchanged by the high priority degree master circuit (200) through the bus (400), and
a logic circuit that latches the high priority degree master signal acquired from the high priority degree master circuit (200),
wherein the control circuit (110) controls a timing for latching the high priority degree master signal and a timing for outputting, to the bus (400), the acquired high priority degree master signal as the access request signal, and
wherein a degree of priority of a bus access right of the auxiliary bus master circuit (100) is set to a higher degree of priority than the low priority degree master circuit (300).

2. The auxiliary bus master circuit (100) according to claim 2, wherein the high priority degree master signal latched in the logic circuit is at least one of a high priority degree master address bus signal and a high priority degree writing data bus signal.

3. The auxiliary bus master circuit (100) according to claim 2, wherein the control circuit (110) performs control in such a way as to output the access request signal to at least one of a bus (400) in which the high priority degree master address bus signal is exchanged and a bus (400) in which the high priority degree master writing data bus signal is exchanged among the buses (400).

4. The auxiliary bus master circuit (100) according to any one of claims 1 to 3, wherein
a high priority degree master request signal for requesting an access right is acquired from the high priority degree master circuit (200), and
the access request signal is output based on a timing at which the high priority degree master request signal is acquired.

5. The auxiliary bus master circuit (100) according to any one of claims 1 to 4, wherein a transfer mode signal indicating a single transfer mode is output as an output of a signal of a transfer mode indicating whether a transfer mode is a single transfer mode or a burst transfer mode, regardless of a transfer mode of the high priority degree master circuit (200).

6. The auxiliary bus master circuit (100) according to claim 4, wherein,
in response to acquisition of the high priority degree master request signal, a high priority degree master address signal indicating an address value accessed by the high priority degree master circuit (200) is acquired and latched, and,
when the access request signal is output, the acquired high priority degree master address signal is output as an address signal indicating an address value accessed by the auxiliary bus master circuit (100).

7. The auxiliary bus master circuit (100) according to claim 6, wherein
a high priority degree master transfer direction signal indicating a transfer direction when the high priority degree master circuit (200) accesses the bus (400) is acquired, and,
in a case where the acquired high priority degree master transfer direction signal indicates writing,
a high priority degree master data signal indicating a data value written by the high priority degree master circuit (200) after a timing at which the high priority degree master address signal is acquired, and,
when the access request signal is output, the same signal as the acquired high priority degree master data signal is output as a writing data bus signal indicating a data value written by the auxiliary bus master circuit (100).

8. The auxiliary bus master circuit (100) according to any one of claims 1 to 7, wherein
an operation mode signal is acquired, and
whether to output the access request signal is switched based on the acquired operation mode signal.

9. The auxiliary bus master circuit (100) according to claim 8, wherein
the operation mode signal includes information about a threshold value address and information about a threshold value condition, and
whether to output the access request signal is switched according to whether an address value indicated by a high priority degree master address signal being a signal of an address bus among the high priority degree master signals satisfies the threshold value address and the threshold value address condition.

10. The auxiliary bus master circuit (100) according to claim 7, wherein
an operation mode signal is acquired,
the acquired operation mode signal includes information about a transfer direction condition, and
whether to output the access request signal is switched according to whether information indicated by the acquired high priority degree master transfer direction signal satisfies the transfer direction condition.

11. An electronic device comprising:
the auxiliary bus master circuit (100) according to any one of claims 1 to 10; and
the high priority degree master circuit (200).

12. A method for controlling an auxiliary bus master circuit (100) that is connected to a bus (400) in a system (500) in which a high priority degree master circuit (200) having a bus access right having a high degree of priority and a low priority degree master circuit (300) having a bus access right having a lower degree of priority than the high priority degree master circuit (200) are connected to one bus (400) **characterized in that** the auxiliary bus master circuit (100) comprises
a control circuit (110) that outputs an access request signal for requesting an access right from the bus (400), according to a timing for outputting at least one of high priority degree master signals being signals exchanged by the high priority degree master circuit (200) through the bus (400), and
a logic circuit that latches the high priority degree master signal acquired from the high priority degree master circuit (200),
wherein the method comprises
outputting the access request signal for requesting the access right from the bus (400), based on a timing for outputting at least one of high priority degree master signals being signals exchanged by the high priority degree master circuit (200) through the bus (400), and
controlling a timing for latching the high priority degree master signal and a timing for outputting, to the bus (400), the acquired high priority degree master signal as the access request signal, and
wherein a degree of priority of a bus access right of the auxiliary bus master circuit (100) is set to a higher degree of priority than the low priority degree master circuit (300).

## Patentansprüche

1. Hilfs-Bus-Master-Schaltung (100), die mit einem Bus (400) in einem System (500) verbunden ist, in dem eine Hoher-Prioritätsgrad-Master-Schaltung (200), die über ein Buszugriffsrecht mit einem hohen Prioritätsgrad verfügt, und eine Niedriger-Prioritätsgrad-Master-Schaltung (300), die über ein Buszugriffsrecht mit einem niedrigeren Prioritätsgrad als die Hoher-Prioritätsgrad-Master-Schaltung verfügt (200), mit einem Bus (400) verbunden sind, **dadurch gekennzeichnet, dass** die Hilfs-Bus-Master-Schaltung (100) umfasst
eine Steuerschaltung (110), die ein Zugriffsanforderungssignal zum Anfordern eines Zugriffsrechts vom Bus (400) ausgibt, basierend auf einem Zeitpunkt zum Ausgeben mindestens eines von Hoher-Prioritätsgrad-Master-Signalen, bei denen es sich um Signale handelt, die von der Hoher-Prioritätsgrad-Master-Schaltung (200) über den Bus (400) ausgetauscht werden, und
eine Logikschaltung, die das von der Hoher-Prioritätsgrad-Master-Schaltung (200) erfasste Hoher-Prioritätsgrad-Master-Signal zwischenspeichert,
wobei die Steuerschaltung (110) einen Zeitpunkt zum Zwischenspeichern des Hoher-Prioritätsgrad-Master-Signals und einen Zeitpunkt zum Ausgeben des erfassten Hoher-Prioritätsgrad-Master-Signals als das Zugriffsanforderungssignal an den Bus (400) steuert, und
wobei ein Prioritätsgrad eines Buszugriffsrechts der Hilfs-Bus-Master-Schaltung (100) auf einen höheren Prioritätsgrad als den der Niedriger-Prioritätsgrad-Master-Schaltung (300) eingestellt ist.

2. Hilfs-Bus-Master-Schaltung (100) nach Anspruch 2, wobei das in der Logikschaltung zwischengespeicherte Hoher-Prioritätsgrad-Master-Signal mindestens eines von einem Hoher-Prioritätsgrad-Master-Adressbus-Signal und einem Hoher-Prioritätsgrad-Schreibdaten-Bussignal ist.

3. Hilfs-Bus-Master-Schaltung (100) nach Anspruch 2, wobei die Steuerschaltung (110) Steuerung derart ausführt, dass das Zugriffsanforderungssignal an mindestens einen von einem Bus (400), in dem das Hoher-Prioritätsgrad-Master-Adressbus-Signal ausgetauscht wird, und einem Bus (400), in dem das Hoher-Prioritätsgrad-Schreibdaten-Bussignal unter den Bussen (400) ausgetauscht wird, ausgegeben wird.

4. Hilfs-Bus-Master-Schaltung (100) nach einem der Ansprüche 1 bis 3, wobei
ein Hoher-Prioritätsgrad-Master-Anforderungssignal zum Anfordern eines Zugriffsrechts von der Hoher-Prioritätsgrad-Master-Schaltung (200) erfasst wird, und
das Zugriffsanforderungssignal auf Grundlage eines Zeitpunkts ausgegeben wird, zu dem das Hoher-Prioritätsgrad-Master-Anforderungssignal erfasst wird.

5. Hilfs-Bus-Master-Schaltung (100) nach einem der Ansprüche 1 bis 4, wobei ein Übertragungsmodus-Signal, das einen Einzelübertragungsmodus angibt, als Ausgabe eines Signals eines Übertragungsmodus ausgegeben wird, das angibt, ob ein Übertragungsmodus ein Einzelübertragungsmodus oder ein Burst-Übertragungsmodus ist, unabhängig von einem Übertragungsmodus der Hoher-Prioritätsgrad-Master-Schaltung (200).

6. Hilfs-Bus-Master-Schaltung (100) nach Anspruch 4, wobei
als Reaktion auf Erfassung des Hoher-Prioritätsgrad-Master-Anforderungssignals, ein Hoher-Prioritätsgrad-Master-Adress-Signal, das einen von der Hoher-Prioritätsgrad-Master-Schaltung (200) abgerufenen Adresswert angibt, erfasst und zwischengespeichert wird, und
wenn das Zugriffsanforderungssignal ausgegeben wird, das erfasste Hoher-Prioritätsgrad-Master-Adress-Signal als Adresssignal ausgegeben wird, das einen von der Hilfs-Bus-Master-Schaltung (100) abgerufenen Adresswert angibt.

7. Hilfs-Bus-Master-Schaltung (100) nach Anspruch 6, wobei
ein Hoher-Prioritätsgrad-Master-Übertragungsrichtungssignal erfasst wird, das eine Übertragungsrichtung angibt, wenn die Hoher-Prioritätsgrad-Master-Schaltung (200) auf den Bus (400) zugreift, und
in einem Fall, in dem das erfasste Hoher-Prioritätsgrad-Master-Übertragungsrichtungssignal Schreiben angibt,
ein Hoher-Prioritätsgrad-Master-Datensignal, das einen Datenwert angibt, der von der Hoher-Prioritätsgrad-Master-Schaltung (200) nach einem Zeitpunkt geschrieben wird, zu dem das Hoher-Prioritätsgrad-Master-Adress-Signal erfasst wurde, und
wenn das Zugriffsanforderungssignal ausgegeben wird, dasselbe Signal wie das erfasste Hoher-Prioritätsgrad-Master-Datensignal als ein Schreibdaten-Bussignal ausgegeben wird, das einen von der Hilfs-Bus-Master-Schaltung (100) geschriebenen Datenwert angibt.

8. Hilfs-Bus-Master-Schaltung (100) nach einem der Ansprüche 1 bis 7, wobei
ein Betriebsmodus-Signal erfasst wird, und
ob das Zugriffsanforderungssignal auszugeben ist, auf Grundlage des erfassten Betriebsmodus-Signals umgeschaltet wird.

9. Hilfs-Bus-Master-Schaltung (100) nach Anspruch 8, wobei
das Betriebsmodus-Signal Informationen über eine Schwellenwertadresse und Informationen über eine Schwellenwertbedingung enthält, und
ob das Zugriffsanforderungssignal auszugeben ist, in Abhängigkeit davon umgeschaltet wird, ob ein Adresswert, der durch ein Hoher-Prioritätsgrad-Master-Adress-Signal angegeben wird, das ein Signal eines Adressbusses unter den Hoher-Prioritätsgrad-Master-Signalen angibt, die Schwellenwertadresse und die Schwellenwertadressbedingung erfüllt.

10. Hilfs-Bus-Master-Schaltung (100) nach Anspruch 7, wobei
ein Betriebsmodus-Signal erfasst wird,
das erfasste Betriebsmodus-Signal Informationen über eine Übertragungsrichtungsbedingung enthält, und
ob das Zugriffsanforderungssignal auszugeben ist, in Abhängigkeit davon umgeschaltet wird, ob durch das erfasste Hoher-Prioritätsgrad-Master-Übertragungsrichtungssignal angegebenen Informationen die Übertragungsrichtungsbedingung erfüllt.

11. Elektronische Vorrichtung, umfassend:
die Hilfs-Bus-Master-Schaltung (100) nach einem der Ansprüche 1 bis 10; und
die Hoher-Prioritätsgrad-Master-Schaltung (200).

12. Verfahren zum Steuern einer Hilfs-Bus-Master-Schaltung (100), die mit einem Bus (400) in einem System (500) verbunden ist, in dem eine Hoher-Prioritätsgrad-Master-Schaltung (200), die über ein Buszugriffsrecht mit einem hohen Prioritätsgrad verfügt, und eine Niedriger-Prioritätsgrad-Master-Schaltung (300), die über ein Buszugriffsrecht mit einem niedrigeren Prioritätsgrad als die Hoher-Prioritätsgrad-Master-Schaltung verfügt (200) mit einem Bus (400) verbunden sind, **dadurch gekennzeichnet, dass** die Hilfs-Bus-Master-Schaltung (100) umfasst
eine Steuerschaltung (110), die ein Zugriffsanforderungssignal zum Anfordern eines Zugriffsrechts vom Bus (400) ausgibt, basierend auf einem Zeitpunkt zum Ausgeben mindestens eines von Hoher-Prioritätsgrad-Master-Signalen, bei denen es sich um Signale handelt, die von der Hoher-Prioritätsgrad-Master-Schaltung (200) über den Bus (400) ausgetauscht werden, und
eine Logikschaltung, die das von der Hoher-Prioritätsgrad-Master-Schaltung (200) erfasste Hoher-Prioritätsgrad-Master-Signal zwischenspeichert,
wobei das Verfahren umfasst
Ausgeben des Zugriffsanforderungssignals zum Anfordern des Zugriffsrechts vom Bus (400) auf Grundlage eines Zeitpunkts zum Ausgeben mindestens eines von Hoher-Prioritätsgrad-Master-Signalen, bei denen es sich um Signale handelt, die von der Hoher-Prioritätsgrad-Master-Schaltung (200) über den Bus (400) ausgetauscht werden, und
Steuern eines Zeitpunkts zum Zwischenspeichern des Hoher-Prioritätsgrad-Master-Signals und eines Zeitpunkts zum Ausgeben des erfassten Hoher-Prioritätsgrad-Master-Signals als das Zugriffsanforderungssignal an den Bus (400), und
wobei ein Prioritätsgrad eines Buszugriffsrechts der Hilfs-Bus-Master-Schaltung (100) auf einen höheren Prioritätsgrad als den der Niedriger-Prioritätsgrad-Master-Schaltung (300) eingestellt ist.

## Revendications

1. Circuit maître de bus auxiliaire (100) qui est connecté à un bus (400) dans un système (500) dans lequel un circuit maître de degré de priorité élevé (200) présentant un droit d'accès au bus présentant un degré de priorité élevé et un circuit maître de degré de priorité faible (300) présentant un droit d'accès au bus présentant un degré de priorité inférieur à celui du circuit maître de degré de priorité élevé (200) sont connectés à un bus (400), **caractérisé en ce que** le circuit maître de bus auxiliaire (100) comprend
un circuit de commande (110) qui délivre en sortie un signal de demande d'accès pour demander un droit d'accès depuis le bus (400), sur la base d'un cadencement pour délivrer en sortie au moins l'un de signaux maîtres de degré de priorité élevé étant des signaux échangés par le circuit maître de degré de priorité élevé (200) via le bus (400), et
un circuit logique qui verrouille le signal maître de degré de priorité élevé acquis à partir du circuit maître de degré de priorité élevé (200),
dans lequel le circuit de commande (110) commande un cadencement pour verrouiller le signal maître de degré de priorité élevée et un cadencement pour délivrer en sortie, au bus (400), le signal maître de degré de priorité élevé acquis en tant que signal de demande d'accès, et
dans lequel un degré de priorité d'un droit d'accès au bus du circuit maître de bus auxiliaire (100) est établi à un degré de priorité plus élevé que le circuit maître de degré de priorité faible (300).

2. Circuit maître de bus auxiliaire (100) selon la revendication 2, dans lequel le signal maître de degré de priorité élevé verrouillé dans le circuit logique est au moins un parmi un signal de bus d'adresse maître de degré de priorité élevé et un signal de bus de données d'écriture de degré de priorité élevé.

3. Circuit maître de bus auxiliaire (100) selon la revendication 2, dans lequel le circuit de commande (110) effectue une commande de manière à délivrer en sortie le signal de demande d'accès vers au moins un parmi un bus (400) dans lequel le signal de bus d'adresse maître de degré de priorité élevé est échangé et un bus (400) dans lequel le signal de bus de données d'écriture maître de degré de priorité élevé est échangé entre les bus (400).

4. Circuit maître de bus auxiliaire (100) selon l'une quelconque des revendications 1 à 3, dans lequel un signal de demande maître de degré de priorité élevée pour demander un droit d'accès est acquis à partir du circuit maître de degré de priorité élevée (200), et
le signal de demande d'accès est délivré en sortie sur la base d'un cadencement auquel le signal de demande maître de degré de priorité élevé est acquis.

5. Circuit maître de bus auxiliaire (100) selon l'une quelconque des revendications 1 à 4, dans lequel un signal de mode de transfert indiquant un mode de transfert unique est délivré en sortie sous la forme d'une sortie d'un signal d'un mode de transfert indiquant si un mode de transfert est un mode de transfert unique ou un mode de transfert en rafale, indépendamment d'un mode de transfert du circuit maître de degré de priorité élevé (200).

6. Circuit maître de bus auxiliaire (100) selon la revendication 4, dans lequel
en réponse à l'acquisition du signal de demande maître de degré de priorité élevé, un signal d'adresse maître de degré de priorité élevé indiquant une valeur d'adresse à laquelle accède le circuit maître de degré de priorité élevé (200) est acquis et verrouillé, et,
lorsque le signal de demande d'accès est délivré en sortie, le signal d'adresse maître de degré de priorité élevé acquis est délivré en sortie en tant que signal d'adresse indiquant une valeur d'adresse à laquelle accède le circuit maître de bus auxiliaire (100).

7. Circuit maître de bus auxiliaire (100) selon la revendication 6, dans lequel
un signal de direction de transfert maître de degré de priorité élevé indiquant une direction de transfert lorsque le circuit maître de degré de priorité élevé (200) accède au bus (400) est acquis, et,
dans un cas dans lequel le signal de direction de transfert maître de degré de priorité élevé acquis indique une écriture,
un signal de données maître de degré de priorité élevé indiquant une valeur de données écrite par le circuit maître de degré de priorité élevé (200) après un cadencement auquel le signal d'adresse maître de degré de priorité élevé est acquis, et,
lorsque le signal de demande d'accès est délivré en sortie, le même signal que le signal de données maître de degré de priorité élevé acquis est délivré en sortie en tant que signal de bus de données d'écriture indiquant une valeur de données écrite par le circuit maître de bus auxiliaire (100).

8. Circuit maître de bus auxiliaire (100) selon l'une quelconque des revendications 1 à 7, dans lequel un signal de mode de fonctionnement est acquis, et
la délivrance en sortie ou non du signal de demande d'accès est commutée sur la base du signal de mode de fonctionnement acquis.

9. Circuit maître de bus auxiliaire (100) selon la revendication 8, dans lequel
le signal de mode de fonctionnement inclut des informations sur une adresse de valeur de seuil et des informations sur une condition de valeur de seuil, et
la délivrance en sortie ou non du signal de demande d'accès est commutée selon qu'une valeur d'adresse indiquée par un signal d'adresse maître de degré de priorité élevé soit un signal d'un bus d'adresse parmi les signaux maîtres de degré de priorité élevée satisfasse à l'adresse de valeur de seuil et à la condition d'adresse de valeur de seuil.

10. Circuit maître de bus auxiliaire (100) selon la revendication 7, dans lequel
un signal de mode de fonctionnement est acquis,
le signal de mode de fonctionnement acquis inclut des informations sur une condition de direction de transfert, et
la délivrance en sortie ou non du signal de demande d'accès est commutée selon que les informations indiquées par le signal de direction de transfert maître de degré de priorité élevé acquis satisfont ou non à la condition de direction de transfert.

11. Dispositif électronique, comprenant :
le circuit maître de bus auxiliaire (100) selon l'une quelconque des revendications 1 à 10 ; et le circuit maître de degré de priorité élevé (200).

12. Procédé de commande d'un circuit maître de bus auxiliaire (100) qui est connecté à un bus (400) dans un système (500) dans lequel un circuit maître de degré de priorité élevé (200) présentant un droit d'accès au bus présentant un degré de priorité élevé et un circuit maître de degré de priorité faible (300) présentant un droit d'accès au bus présentant un degré de priorité inférieur à celui du circuit maître de degré de priorité élevé (200) sont connectés à un bus (400), **caractérisé en ce que** le circuit maître de bus auxiliaire (100) comprend
un circuit de commande (110) qui délivre en sortie un signal de demande d'accès pour demander un droit d'accès depuis le bus (400), selon d'un cadencement pour délivrer en sortie au moins l'un de signaux maîtres de degré de priorité élevé étant des signaux échangés par le circuit maître de degré de priorité élevé (200) via le bus (400), et
un circuit logique qui verrouille le signal maître de degré de priorité élevé acquis à partir du circuit maître de degré de priorité élevé (200),
dans lequel le procédé comprend les étapes consistant à
délivrer en sortie le signal de demande d'accès pour demander le droit d'accès depuis le bus (400), sur la base d'un cadencement pour délivrer en sortie au moins l'un de signaux maîtres de degré de priorité élevé étant des signaux échangés par le circuit maître de degré de priorité élevé (200) via le bus (400), et
commander un cadencement pour verrouiller le signal maître de degré de priorité élevée et un cadencement pour délivrer en sortie, au bus (400), le signal maître de degré de priorité élevé acquis en tant que signal de demande d'accès, et
dans lequel un degré de priorité d'un droit d'accès au bus du circuit maître de bus auxiliaire (100) est établi à un degré de priorité plus élevé que le circuit maître de degré de priorité faible (300).
